# EUROPÄISCHE PATENTSCHRIFT

(11) **EP 3 449 723 B1**
(45) Veröffentlichungstag und Bekanntmachung des Hinweises auf die Patenterteilung: **22.09.2021**
(21) Anmeldenummer: 18188671.4
(22) Anmeldetag: 13.08.2018
(51) Int. Cl.: A01M 7/00

(54) **STEUER- UND/ODER REGELSYSTEM, LANDWIRTSCHAFTLICHES NUTZFAHRZEUG UND VERFAHREN ZUR STEUERUNG UND/ODER REGELUNG**
CONTROL AND/OR REGULATING SYSTEM, AGRICULTURAL VEHICLE AND METHOD FOR CONTROLLING AND/OR REGULATING
SYSTÈME DE COMMANDE ET/OU DE RÉGLAGE, VÉHICULE AGRICOLE ET PROCÉDÉ DE COMMANDE ET/OU DE RÉGLAGE

(30) Priorität: 30.08.2017 DE 102017119859
(43) Veröffentlichungstag der Anmeldung: 06.03.2019
(73) Patentinhaber: Amazonen-Werke H. Dreyer SE & Co. KG, 49205 Hasbergen (DE)
(72) Erfinder: große Prues, Frank, 49593 Bersenbrück (DE)

(56) Entgegenhaltungen:
- EP-A1- 1 167 095
- EP-A1- 3 357 333
- WO-A1-2017/211547
- DE-A1-102015 101 032

## Beschreibung

Die Erfindung betrifft ein Steuer- und/oder Regelsystem für ein landwirtschaftliches Nutzfahrzeug gemäß dem Oberbegriff des Patentanspruchs 1. Ferner betrifft die Erfindung ein landwirtschaftliches Nutzfahrzeug sowie ein Verfahren zur Steuerung und/oder Regelung.

Derartige Systeme werden für landwirtschaftliche Nutzfahrzeuge zum Ausbringen von Material, wie Düngemittel, Pflanzenschutzmittel oder Saatgut verwendet. Um das Material großflächig und effizient auf dem zu bearbeitenden Feldboden auszubringen, weisen die landwirtschaftlichen Nutzfahrzeuge ein Verteilergestänge mit mehreren Sprühdüsen auf. Das Verteilergestänge erstreckt sich quer zur Fahrtrichtung und kann Arbeitsbreiten von bis zu 40 m aufweisen. Die Sprühdüsen, welche in regelmäßigem Abstand am Verteilergestänge angebracht sind, dienen der Ausbringung des Materials auf den zu bearbeitenden Boden.

Für eine effiziente Ausbringung des Materials soll der Abstand zwischen dem Verteilergestänge und dem Boden über die gesamte Arbeitsbreite möglichst konstant bleiben. Problematisch ist es, wenn das landwirtschaftliche Nutzfahrzeug in unterschiedlich tiefen Spurrillen des Bodens, einseitig in einer Furche oder an einem Hang des zu bearbeitenden Feldes fährt. Bei derartigen Bodenunebenheiten können die Enden des Verteilergestänges in Bodenkontakt kommen und in Extremfällen irreparabel beschädigt werden. Zusätzlich ist die homogene Verteilung des auszubringenden Materials, durch nachteilige Drifteffekte aufgrund der geneigten Stellung des Verteilergestänges, nicht mehr gegeben.

Um unerwünschte Bewegungen um die Fahrzeuglängsachse auszugleichen, sind Vorrichtungen bekannt, die über eine Pendelaufhängung und über Neigungssensoren oder Abstandssensoren verfügen und welche durch Stellorgane diese Neigung auszugleichen versuchen. Generell wird hierbei eine horizontale Lage des Verteilergestänges in Relation zu dem bearbeitenden Boden angestrebt. Es wird beispielhaft auf die DE 20 2007 011 631 U1 verwiesen. Dort wird eine Aufhängvorrichtung für ein Verteilergestänge beschrieben, wobei lediglich zwei fluidische Niveauventile im Bereich der Aufhängung eines Hilfsrahmens am Fahrzeug angeordnet sind. Je nach Neigungsstellung des Verteilergestänges in Bezug auf das Fahrzeug, werden die Ventile unterschiedlich geöffnet oder geschlossen. Im Speziellen geben die Ventile proportional zur Auslenkung des Verteilergestänges einen Druck auf ein Stellorgan ab, was ein Umströmen des Fluides in das gekoppelte Stellorgan bewirkt. Das Stellorgan, welches zweckmäßigerweise als ein pneumatisches und/oder hydraulisches Stellorgan ausgebildet ist, wird dadurch aktiviert.

Die Aktivierung des Stellorgans bewirkt eine Verschwenkung des Verteilergestänges. Das Stellorgan kann somit die Neigung des Verteilergestänges ändern. Ist die Neigung wieder ausgeglichen, schließt das Ventil wieder.

Es gibt allerdings Situationen, wie beispielsweise den Straßentransport oder beim Ein- und Ausklappen des Verteilergestänges, bei denen das Verteilergestänge starr mit dem landwirtschaftlichen Fahrzeug über das Stellorgan verbunden sein soll. Dazu sind Ventile mit Absperrfunktion in den Zuführleitungen zu dem Stellorgan angeordnet. Sobald diese geschlossen sind, kann kein Fluid aus dem Stellorgan entweichen und das Verteilergestänge ist starr mit dem landwirtschaftlichen Nutzfahrzeug verbunden. Das anschließende Öffnen der Ventile, bspw. bei asymmetrisch geklappten Verteilergestängen, kann zu unkontrollierten und damit schädlichen Bewegungen des Verteilergestänges führen. Die Ventile sind hierbei idealerweise sitzdicht ausgeführt. Das bedeutet, dass bei geschlossenem Zustand kein Fluid passieren kann. Ein gattungsgemäßes System wird in den Dokumenten WO2017/211547 A1, EP 3357333 A1, EP 1167095 A1 oder DE 102015101032 A1 gezeigt.

Der Erfindung liegt daher die Aufgabe zugrunde, ein Steuer- und/oder Regelsystem für ein landwirtschaftliches Nutzfahrzeug anzugeben, das die Gefahr von unkontrollierten Bewegungen des Verteilergestänges, insbesondere beim Öffnen von Ventilen mit Absperrfunktion, verringert. Der Erfindung liegt ferner die Aufgabe zugrunde, ein landwirtschaftliches Nutzfahrzeug sowie ein Verfahren zur Steuerung und/oder Regelung anzugeben.

Die Aufgabe wird erfindungsgemäß durch ein Steuer- und/oder Regelsystem mit den Merkmalen des Anspruchs 1 gelöst. Im Hinblick auf das landwirtschaftliche Nutzfahrzeug wird die Aufgabe durch den Gegenstand des Anspruchs 9 gelöst. Ferner wird die Aufgabe im Hinblick auf das Verfahren durch den Gegenstand des Anspruchs 10 gelöst.

Die Erfindung beruht auf dem Gedanken, ein Steuer- und/oder Regelsystem für ein landwirtschaftliches Nutzfahrzeug anzugeben, das ein Verteilergestänge zum Ausbringen von Material, wie Düngemittel, Pflanzenschutzmittel oder Saatgut umfasst, bei dem sich das Verteilergestänge quer zur Fahrtrichtung erstreckt und ein Mittelteil und zwei mit dem Mittelteil durch Gelenke verbundene seitliche Ausleger mit mehreren zueinander in Transportstellung einklappbaren und in Arbeitsstellung ausklappbaren, durch Gelenke verbundene Gestängeabschnitte aufweist. Das Verteilergestänge weist wenigstens ein Stellorgan und wenigstens zwei Ventileinheiten, insbesondere wenigstens zwei Druckregelventile, zur Regelung der Neigung des Verteilergestänges auf, wobei die Ventileinheiten mit dem Stellorgan verbunden sind. Das System weist eine Datenverarbeitungseinheit auf, die mit den Ventileinheiten signalverbunden oder signalverbindbar ist. Jeder Ventileinheit ist wenigstens ein Proportionalventil zugeordnet, wobei die Datenverarbeitungseinheit mit dem Proportionalventil signalverbunden oder signalverbindbar ist.

Mit anderen Worten, erfüllen im Rahmen der Erfindung die Ventileinheiten eine Druckregelfunktion und die Proportionalventile eine Absperrfunktion. Das bedeutet, dass die Absperrfunktion von der Druckregelfunktion entkoppelt ist.

Die Erfindung hat den Vorteil, dass die Entkopplung der Absperrfunktion von der Druckregelfunktion der Ventileinheiten eine präzise Steuerung des Drucks zur Entgegenwirkung einer auftretenden Neigung des Verteilergestänges ermöglicht. Weiterhin wird die Effizienz der Neigungsregelung des Verteilergestänges durch den Einsatz von Proportionalventilen in Kombination mit den Ventileinheiten verbessert. Proportionalventile haben den Vorteil, dass diese ein stetiges Öffnen ihres Durchgangsquerschnittes ermöglichen. Dadurch wird die auftretende Neigung des Verteilergestänges kontrolliert verzögert. Vorteilhaft können die Ventileinheiten der Neigungsänderung während des Öffnungsvorganges der Proportionalventile annährend in Echtzeit entgegenwirken. Mittels der Proportionalventile kann das Verteilergestänge vorteilhafterweise in einer starren Position gehalten werden. Dies ist besonders vorteilhaft beim Fahren des landwirtschaftlichen Nutzfahrzeuges auf einer Straße oder beim Ein- und Ausklappen des Verteilergestänges. Da die Proportionalventile geschlossen werden können, kann kein Fluid mehr aus dem Stellorgan entweichen und das Verteilergestänge kann bei Bedarf fixiert am landwirtschaftlichen Nutzfahrzeug gehalten werden. Das Stellorgan kann vorzugsweise als Zylinder ausgebildet sein. Generell hat die Erfindung den Vorteil, dass die Neigungseinstellung des Verteilergestänges verbessert beeinflusst wird. Damit kann eine weitgehend homogene Ausgabe von Düngemittel, Pflanzenschutzmittel oder Saatgut gewährleistet werden und eine Beschädigung des Verteilergestänges kann effizient vermieden werden. Dies erhöht die Wirtschaftlichkeit des landwirtschaftlichen Nutzfahrzeuges.

Im Rahmen der Anmeldung kann das Stellorgan sowohl ein hydraulisches, als auch ein pneumatisches, elektrisches oder mechanisches System zur Regelung der Neigung umfassen. Es ist hierbei denkbar, dass ein Stellorgan, beispielsweise einen Pneumatik- oder Hydraulikzylinder umfasst.

Weiterhin umfasst der Begriff des landwirtschaftlichen Nutzfahrzeuges im Rahmen der Anmeldung sowohl gezogene, selbstfahrende und getragene Maschinen. Demzufolge erstreckt sich die Erfindung auf Fahrzeugkombinationen, umfassend ein Zugfahrzeug und eine Maschine, auf selbstfahrende Maschinen sowie auf Maschinen, die direkt von einem Trägerfahrzeug bzw. einem Schlepper getragen sind, bei denen jeweils ein erfindungsgemäßes Steuer- und/oder Regelsystem vorgesehen ist.

Bevorzugte Ausführungsformen der Erfindung sind in den Unteransprüchen angegeben.

Bei einer bevorzugten Ausführungsform ist die Datenverarbeitungseinheit derart konfiguriert, dass vor dem Öffnen der Proportionalventile basierend auf Messsignalen von wenigstens einem Sensor ein Istwert einer Neigungslage des Verteilergestänges ermittelbar ist. Hierbei ist vorteilhaft, dass beim Öffnen der Proportionalventile der Neigungsänderung des Verteilergestänges durch die Datenverarbeitungseinheit anhand des ermittelten Istwerts einfach und schnell gegengesteuert werden kann.

Bei einer weiteren bevorzugten Ausführungsform ist die Datenverarbeitungseinheit derart konfiguriert, dass ein Sollwert der Neigungslage des Verteilergestänges durch einen Signalfilter, insbesondere ein PT1-Glied, ermittelbar ist. Dies hat den Vorteil, dass die Regelung des Sollwerts durch einen Signalfilter, beispielsweise durch ein PT1-Glied, ein dynamisches Regelverhalten ermöglicht. Der Signalfilter kann dabei bei der Ermittlung des Sollwerts der Neigungslage eine Zeitverzögerung aufweisen und somit der Neigungsänderung des Verteilergestänges annähernd stufenlos und kontinuierlich zeitverzögert entgegenwirken. Einem Aufschwingen des Verteilergestänges kann somit vorgebeugt werden.

Bei einer weiteren Ausführungsform sind beim Öffnen, insbesondere beim verzögerten Öffnen, der Proportionalventile die Ventileinheiten an einen definierbaren Druck anpassbar derart, dass die Neigungslage des Verteilergestänges gehalten wird. Dies hat den Vorteil, dass die Ventileinheiten während des Öffnungsvorganges der Proportionalventile zu jedem Zeitpunkt der Neigungsänderung aufgrund eines Absackens des Verteilergestänges auf den erforderlichen Sollwert angepasst werden können. Dabei wird in einer linkseitigen ersten Druckseite und einer rechtsseitigen zweiten Druckseite des Stellorgans der Druck derart angepasst, dass die ausgerichtete Neigung des Verteilergestänges gehalten wird. Die Ventileinheiten wirken somit einem unkontrollierten Absacken des Verteilergestänges kontinuierlich entgegen. Die ausgerichtete Neigung des Verteilergestänges wird somit durch die Ventileinheiten gehalten.

Vorteilhafterweise sind, basierend auf einem gemessenen Signal wenigstens eines Sensors oder einem anderweitig ermittelten Istwert mittels eines Soll-Ist-Wert Abgleichs, die Ventileinheiten unabhängig voneinander durch die Datenverarbeitungseinheit an einen Sollwert anpassbar. Die unabhängige Anpassung der Ventileinheiten an einen Sollwert, ist besonders vorteilhaft für asymmetrische Verteilergestänge. Es ist generell denkbar, dass bspw. Neigungssensoren und/oder Abstandssensoren eingesetzt werden, um die Neigung des Verteilergestänges zu bestimmen.

Bei einer besonders bevorzugten Ausführungsform ist jeder Ventileinheit wenigstens ein Klappzustandssensor zugeordnet, wobei die Datenverarbeitungseinheit mit dem Klappzustandssensor signalverbunden oder signalverbindbar ist. Der Einsatz von Klappzustandssensoren hat den Vorteil, dass über den Klappzustand des Verteilergestänges mittels in der Datenverarbeitungseinheit gespeicherter Sollwerte eine zwischen den Ventileinheiten auftretende Druckdifferenz ermittelt werden kann. Es sind hierzu keine zusätzlichen Komponenten, wie bspw. weitere Sensoren zur Druckmessung, erforderlich. Dies ermöglicht eine Kostenersparnis und einen einfachen Aufbau zur Ermittlung der Druckdifferenz. Die Klappzustandssensoren können beispielsweise am Verteilergestänge angeordnet sein.

Vorzugsweise sind die Ventileinheiten in gleichen und/oder verschiedenen Stellungen unabhängig voneinander ein- und/oder verstellbar. Das bedeutet, dass die beiden Ventileinheiten jeweils unabhängig über ein elektronisches Signal von der Datenverarbeitungseinheit angesteuert werden können und auf einen verschiedenen Sollwert eingestellt werden können. Daher ist das Steuer- und/oder Regelsystem effizient sowohl für symmetrische, als auch für asymmetrische Verteilergestänge verwendbar. Vor allem bei asymmetrischen Verteilergestängen, welche rechtsseitig und linksseitig von einer zentralen Aufhängung des Verteilergestänges eine unterschiedliche Arbeitsbreite aufweisen, herrscht aufgrund der unterschiedlichen Masseverteilung ein unterschiedlicher Druck. Da die beiden Ventileinheiten unabhängig voneinander ein- und/oder verstellbar sind, können auch Druckunterschiede am Verteilergestänge präzise erfasst und ausgeglichen werden. Dadurch kann auch ein asymmetrisches Verteilergestänge sicher in einer horizontalen Lage in Relation zum Boden gehalten werden.

In einer bevorzugten Ausführungsform sind die Ventileinheiten anhand einer bekannten Kennlinie elektronisch gesteuert auf einen vorbestimmten Sollwert einstellbar. Die Kennlinien beschreiben beispielsweise den Zusammenhang zwischen einem auftretenden Druck und dem zugehörigen benötigten elektrischen Strom an einer Steuerspule des Ventils. Beispielhaft kann über den Klappzustandssensor durch die Datenverarbeitungseinheit ein einzustellender Sollwert der Ventileinheiten ermittelt werden, wodurch anhand der Kennlinie ein Steuerstrom auf die Ventile geschaltet wird, um den entsprechenden Druck einzustellen. Dies hat den Vorteil, dass über die Kennlinie der Ventileinheiten der Druck auf das Verteilergestänge präzise an einen Sollwert angepasst werden kann.

In einer bevorzugten Ausführungsform weisen die beiden Ventileinheiten bei einer symmetrischen, horizontal ausgerichteten Lage des Verteilergestänges, einen identischen Druck, insbesondere von 70 - 90 bar, auf. Ein symmetrisches Verteilergestänge weist generell auf beiden Seiten der zentralen Aufhängung die gleiche Arbeitsbreite auf. Daher liegt auf dem Stellorgan an beiden Seiten der gleiche Druck durch die rechtsseitige und linksseitige Masse des Verteilergestänges an. Der Druckunterschied ist daher nahezu 0bar. Es ist demnach zweckmäßig, die Ventileinheiten auf ein identisches Druckniveau einzustellen und dieses beizubehalten. Bei einer auftretenden Neigung des Verteilergestänges, kann der auftretende Druckunterschied an den Ventileinheiten über die Datenverarbeitungseinheit wieder an den ursprünglichen beidseitig identischen Druck angepasst werden. Es kann daher zu gleichen Anteilen in den jeweiligen Zylinderkammern des Stellorgans der Druck erhöht, beziehungsweise erniedrigt werden, um das Verteilergestänge in die horizontale Ausgangslage zurückzuführen. Umfasst bspw. das Stellorgan einen Differentialzylinder, muss zweckmäßigerweise auch bei gleicher Arbeitsbreite des Verteilergestänges ein Druckunterschied zwischen den Ventileinheiten eingestellt werden. Differentialzylinder weisen nur auf einer Seite des Zylinderkolbens eine Kolbenstange auf. Aufgrund der verkleinerten Kolbenfläche bzw. Wirkfläche durch die Kolbenstange herrscht bei symmetrischer Lage in der auf der Seite der Kolbenstange liegenden Zylinderkammer ein höherer Druck im Verhältnis zum Druck in der gegenüberliegenden Zylinderkammer.

In einer weiteren Ausführungsform weisen die beiden Ventileinheiten bei einer asymmetrisch oder geneigt ausgerichteten Lage des Verteilergestänges, eine Druckdifferenz auf. Damit sich das Verteilergestänge nicht noch stärker zu der geneigten Seite hinbewegt, muss diese Druckdifferenz über die Ventileinheiten gehalten werden. Die Ventile werden hierzu zweckmäßigerweise über die Datenverarbeitungseinheit derart mit einem elektrischen Signal angesteuert, dass der Druckunterschied aufrechterhalten wird und sich das Verteilergestänge nicht dreht.

Im Rahmen der Erfindung wird weiterhin ein landwirtschaftliches Nutzfahrzeug zum Ausbringen von Material, wie Düngemittel, Pflanzenschutzmittel oder Saatgut, mit einem Verteilergestänge und einem Steuer- und/oder Regelsystem nach einem der vorhergehenden Ausführungsformen beansprucht. Durch das erfindungsgemäße Steuer- und/oder Regelsystem kann effizient die Neigung des Verteilergestänges relativ zum Boden beeinflusst werden und die Gefahr von unkontrollierten Bewegungen des Verteilergestänges, insbesondere beim Öffnen von Proportionalventilen, kann verringert werden. Dadurch ist eine homogene Ausbringung des Materials gewährleistet.

Weiterhin wird im Rahmen der Erfindung ein Verfahren zur Steuerung und/oder Regelung eines landwirtschaftlichen Nutzfahrzeuges mit einem Verteilergestänge zum Ausbringen von Material, wie Düngemittel, Pflanzenschutzmittel oder Saatgut, beansprucht. Dabei umfasst die Steuerung und/oder Regelung eine Datenverarbeitungseinheit, die ein Stellsignal für wenigstens ein Proportionalventil generiert. Ferner wird das Proportionalventil durch das Stellsignal angesteuert und betätigt. Des Weiteren generiert die Datenverarbeitungseinheit während der Betätigung des Proportionalventils ein Druckregelsignal für wenigstens eine Ventileinheit. Die Ventileinheit wird durch das Druckregelsignal anhand einer in der Datenverarbeitungseinheit gespeicherten Kennlinie auf einen vorbestimmten Sollwert eingestellt. Das bedeutet, dass zweckmäßigerweise beim Öffnen der Proportionalventile die Ventileinheiten auf einen durch die Datenverarbeitungseinheit mittels Soll-Ist-Wert Abgleich generierten Sollwert angepasst und eingestellt werden. Der Istwert basiert dabei auf einem gemessenen Signal wenigstens eines Sensors oder wird anderweitig ermittelt.

In einer bevorzugten Ausführungsform des Verfahrens wird vor dem Öffnen der Proportionalventile basierend auf Messsignalen von wenigstens einem Sensor ein Istwert einer Neigungslage des Verteilergestänges ermittelt.

In einer weiteren bevorzugten Ausführungsform des Verfahrens wird ein Sollwert der Neigungslage des Verteilergestänges durch einen Signalfilter, insbesondere durch ein PT1-Glied, ermittelt.

In einer besonders bevorzugten Ausführungsform des Verfahrens werden beim Öffnen, insbesondere beim verzögerten Öffnen, der Proportionalventile die Ventileinheiten an einen definierbaren Druck angepasst Die Neigungslage des Verteilergestänges wird gehalten.

In einer weiteren Ausführungsform des Verfahrens werden die Ventileinheiten in gleichen und/oder verschiedenen Ventilstellungen unabhängig voneinander ein- und/oder verstellt.

Bei einer weiteren Ausführungsform des Verfahrens ermittelt wenigstens ein Klappzustandssensor den Klappzustand des Verteilergestänges und erzeugt ein Klappzustandssignal. Des Weiteren empfängt die Datenverarbeitungseinheit das Klappzustandssignal und generiert wenigstens ein Stellsignal für die wenigstens eine Ventileinheit. Die Ventileinheit wird durch das Stellsignal anhand einer in der Datenverarbeitungseinheit gespeicherter Kennlinie auf einen vorbestimmten Sollwert eingestellt.

Zu den Vorteilen des Verfahrens und dessen Ausführungsformen zur Steuerung und/oder Regelung eines landwirtschaftlichen Nutzfahrzeuges wird auf die im Zusammenhang mit dem Steuer- und/oder Regelsystem erläuterten Vorteile verwiesen. Darüber hinaus kann das Verfahren alternativ oder zusätzlich einzelne oder eine Kombination mehrerer zuvor in Bezug auf das Steuer- und/oder Regelsystem genannte Merkmale aufweisen.

Die Erfindung wird nachstehend mit weiteren Einzelheiten unter Bezug auf die beigefügten schematischen Zeichnungen näher erläutert. Darin zeigen
- Fig. 1: eine Detailansicht auf ein Verteilergestänge an einem Mittelteil mit einem erfindungsgemäßen Steuer- und/oder Regelsystem und zwei mit dem Mittelteil verbundene seitliche Ausleger;
- Fig. 2a-d: jeweils eine Heckansicht eines landwirtschaftlichen Nutzfahrzeuges mit einem Steuer- und/oder Regelsystem und einem symmetrischen Verteilergestänge nach einem erfindungsgemäßen Ausführungsbeispiel, sowie eine Detailansicht des Steuer- und/oder Regelsystems gemäß Fig. 1;
- Fig. 3a-d: jeweils eine Heckansicht eines landwirtschaftlichen Nutzfahrzeuges mit einem Steuer- und/oder Regelsystem und einem asymmetrischen Verteilergestänge nach einem weiteren erfindungsgemäßen Ausführungsbeispiel, sowie eine Detailansicht des Steuer- und/oder Regelsystems gemäß Fig. 1;
- Fig. 4a-d: jeweils eine Heckansicht eines landwirtschaftlichen Nutzfahrzeuges mit einem Steuer- und/oder Regelsystem und einem symmetrischen Verteilergestänge nach einem dritten erfindungsgemäßen Ausführungsbeispiel, sowie eine Detailansicht des Steuer- und/oder Regelsystems gemäß Fig. 1.

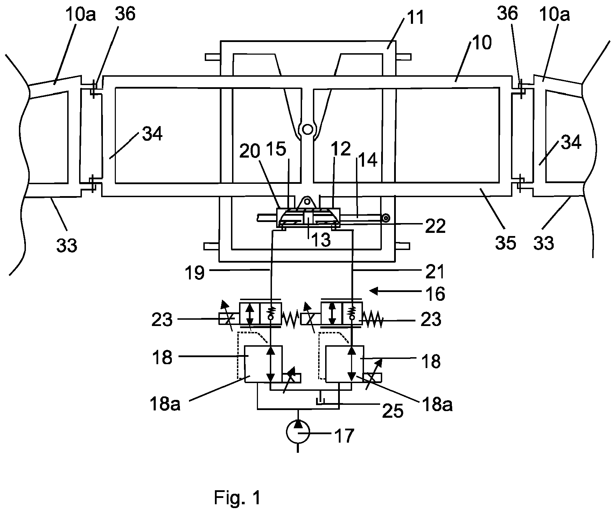

Fig. 1 zeigt eine Detailansicht auf ein Verteilergestänge 10 an einem Mittelteil 11 mit einem erfindungsgemäßen Steuer- und/oder Regelsystem. Das Verteilergestänge 10 dient dem Ausbringen von Material, wie Düngemittel, Pflanzenschutzmittel oder Saatgut. Das Verteilergestänge 10 erstreckt sich quer zur Fahrtrichtung und weist ein Mittelteil 11 und zwei mit dem Mittelteil 11 durch Gelenke 36 verbundene seitliche Ausleger 33 mit mehreren zueinander in Transportstellung einklappbaren und in Arbeitsstellung ausklappbaren, durch Gelenke 36 verbundene Gestängeabschnitte 10a auf. Des Weiteren weist das Verteilergestänge 10 ein Stellorgan 12 und zwei Ventileinheiten 18, insbesondere zwei Druckregelventile 18a, zur Regelung der Neigung des Verteilergestänges 10 auf. Die Ventileinheiten 18 sind mit dem Stellorgan 12 verbunden. Ferner weist das System eine nicht dargestellte Datenverarbeitungseinheit auf, die mit den Ventileinheiten 18 signalverbunden oder signalverbindbar ist. Jeder Ventileinheit 18 ist ein Proportionalventil 23 zugeordnet, wobei die Datenverarbeitungseinheit mit dem Proportionalventil 23 signalverbunden oder signalverbindbar ist.

Die Ventileinheiten 18 sind in Fig. 1 als Druckregelventile 18a ausgeführt und werden nachfolgend als solche bezeichnet.

Der in Fig. 1 dargestellte Mittelteil 11 ist beispielhaft drehfest mit dem landwirtschaftlichen Nutzfahrzeug verbunden und kann zweckmäßigerweise höhenverstellbar ausgebildet sein. Der Mittelteil 11 ist durch mehrere Streben beispielhaft in Form eines Rechtecks gebildet. Der Mittelteil 11 bildet die Aufhängung für das Verteilergestänge 10.

Die Detailansicht zeigt den mittleren Teil des Verteilergestänges 10, sowie zwei angrenzende Gestängeabschnitte 10a des Verteilergestänges 10. Die einzelnen Gestängeabschnitte 10a können durch Horizontalstreben 35 und Vertikalstreben 34 gebildet sein.

Zur Einstellung der Neigung des Verteilergestänges 10 ist ein Stellorgan 12 und sind zwei Druckregelventile 18a zur Betätigung des Stellorgans 12 vorgesehen. Das Stellorgan 12 ist einerseits direkt mit dem Mittelteil 11 und andererseits direkt mit dem Verteilergestänge 10 mechanisch verbunden. Das Stellorgan 12 ist als doppeltwirkender Zylinder ausgebildet, der einen Kolben 13 in einem Gehäuse 15 aufweist, welcher beidseitig mit Druck beaufschlagbar ist. Auf beiden Seiten des Kolbens 13 sind Kolbenstangen 14 angeordnet. Eine der beiden Kolbenstangen 14 ist mit dem Mittelteil 11 mechanisch verbunden, die andere Kolbenstange 14 weist ein freies Ende auf. Die Kraftübertragung vom Mittelteil 11 auf das Verteilergestänge 10 erfolgt daher durch das Stellorgan 12 in direkter Weise. Generell kann das Stellorgan 12 auch durch einen Zylinder gebildet sein, der auf beiden Seiten ein unterschiedliches Flächenverhältnis aufweist. Beispielsweise ist ein Zylinder, insbesondere ein Differentialzylinder denkbar, welcher eine Ring- und eine Kolbenfläche mit unterschiedlichen Flächen aufweist.

Zur Kraftübertragung und damit zur Neigungseinstellung ist das Stellorgan 12 mit einem Hydraulikkreislauf 16 verbunden. Der Hydraulikkreislauf 16 ist durch einen offenen Kreislauf gebildet, welcher ein Hydraulikreservoir 25 und eine Pumpe 17 umfasst. Zwischen der Pumpe 17 und dem Hydraulikreservoir 25 einerseits, und dem Stellzylinder 12 andererseits sind zwei Druckregelventile 18 angeordnet. Anders gesagt verbinden die Druckregelventile 18 die Pumpe 17 und das Hydraulikreservoir 25 mit den beiden Druckseiten 20, 22 des Stellorgans 12. Hierzu weist der Hydraulikkreislauf 16 erste und zweite Zuführleitungen 19, 21 zwischen dem Stellorgan 12 und den jeweiligen Druckregelventil 18a auf.

Jedem Druckregelventil 18a ist jeweils wenigstens ein nicht dargestellter Klappzustandssensor zugeordnet. Die Klappzustandssensoren können beispielsweise am Verteilergestänge 10 und/oder am Mittelteil 11 angeordnet sein. Mit den Klappzustandssensoren kann der Klappzustand des Verteilergestänges 10 gemessen werden. Diese Messsignale können zur Regelung der Druckregelventile 18a durch die nicht dargestellte Datenverarbeitungseinheit verarbeitet werden. Die Druckregelventile 18a können dann zweckmäßigerweise je nach gemessenem Wert mittels der Kennlinie der betreffenden Ventile angepasst werden.

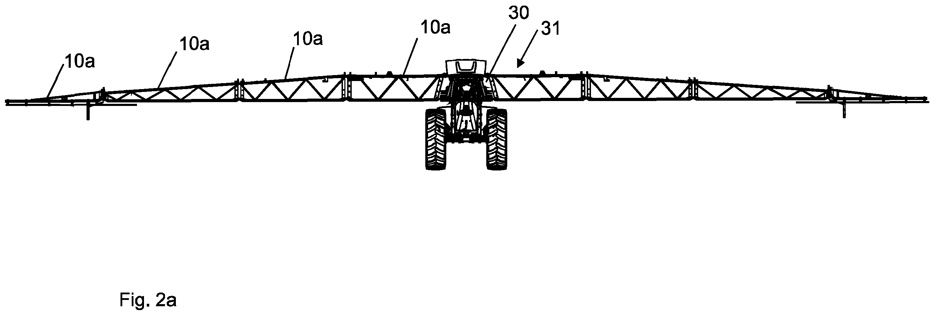

Die Figuren 2a-c zeigen jeweils in schematischer Weise eine Heckansicht einer Maschine 31, welche als Feldspritze ausgebildet ist. Die Feldspritze kann von einem Zugfahrzeug gezogen werden, selbstfahrend sein oder an ein landwirtschaftliches Nutzfahrzeug angebaut sein. Den Figuren 2a-c ist gemeinsam, dass die Maschine 31 ein Verteilergestänge 10 und einen Vorratsbehälter 30 umfasst, in welchem auszubringendes Material, wie beispielsweise Düngemittel, Pflanzenschutzmittel oder Saatgut untergebracht ist. Das Verteilergestänge 10 weist hierzu Sprühdüsen auf, die an der Unterseite des Verteilergestänges 10 entlang angeordnet sind. Die Sprühdüsen können durch ein Schlauchsystem mit einer Pumpe und dem Vorratsbehälter 30 verbunden sein. Das Verteilergestänge 10 ist vorteilhafterweise für den Straßenverkehr klappbar ausgestaltet.

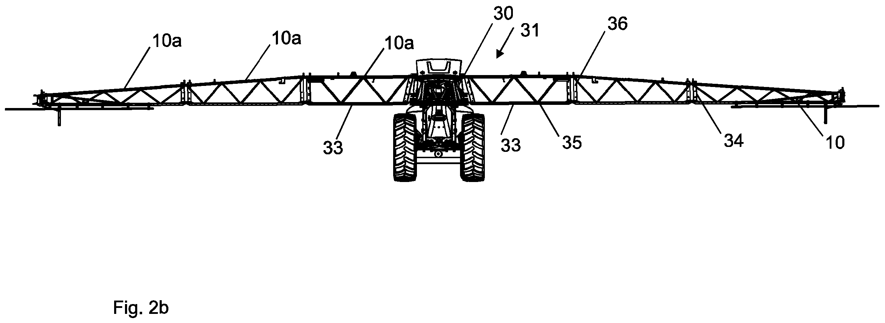

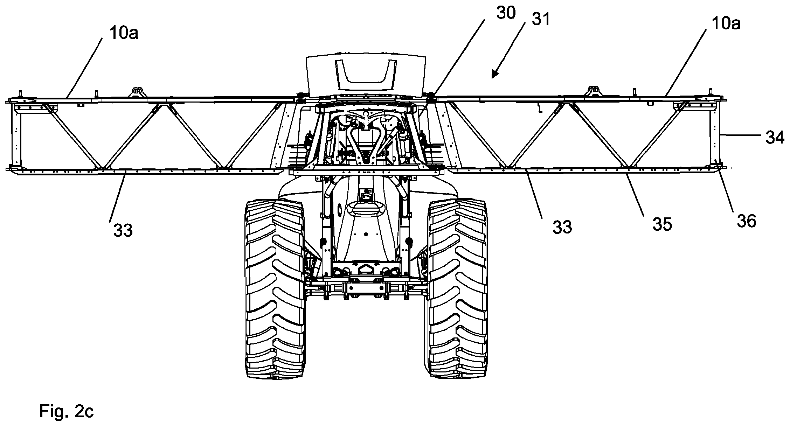

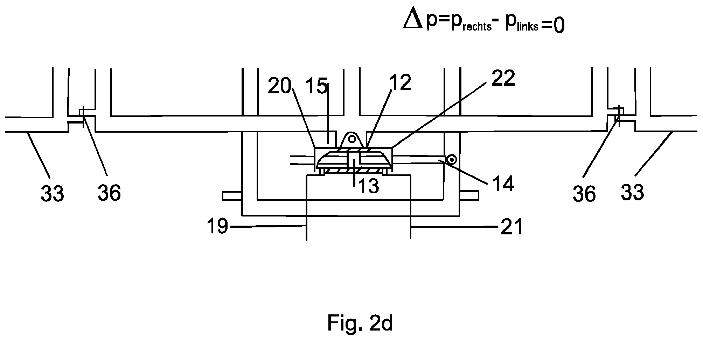

Die Figuren 2 a - c unterscheiden sich durch die Breite des Verteilergestänges 10. Hierbei ist in Fig. 2a das Verteilergestänge vollständig ausgeklappt. Es besteht auf jeder Seite des Gestänges aus vier Gestängeabschnitten 10a und einem zentralen Gestängeabschnitt in der Mitte. Fig. 2b zeigt das Verteilergestänge 10 mit auf beiden Seiten eingeklapptem äußerem Gestängeabschnitt 10a. In Fig. 2c sind demgegenüber jeweils die äußeren drei Gestängeabschnitte 10a eingeklappt. Das Verteilergestänge 10, beziehungsweise die Gestängeabschnitte 10a sind jeweils durch Horizontalstreben 35 und Vertikalstreben 34 gebildet.

Das Verteilergestänge 10 ist zentral an einem Mittelteil 11 der Maschine 30 aufgehängt. Eine Verstellung der Gesamtneigung des Verteilergestänges 10, also eine Verstellung des ausgeklappten, geraden Verteilergestänges 10 ist durch ein Steuer- und/oder Regelsystem gemäß Fig. 1 möglich.

Fig. 2d zeigt hierzu eine Detailansicht des Steuer- und/oder Regelsystems gemäß Fig. 1 mit den eingestellten Druckverhältnissen für das symmetrisch gelagerte Verteilergestänge 10. Die Druckdifferenz Δp zwischen der linksseitigen ersten Druckseite 20 und der rechtsseitigen zweiten Druckseite 22 des Stellorgans 12 ist gleich Null. Beide Druckseiten sind daher auf denselben Druck eingestellt. Für ein symmetrisch gelagertes Verteilergestänge 10 kann dieser Druck beispielsweise im Bereich von 70 - 90bar liegen. Umfasst bspw. das Stellorgan 12 einen nicht dargestellten Differentialzylinder, wird zweckmäßigerweise auch bei symmetrisch geklappten Verteilergestänge 10 ein Druckunterschied zwischen den Druckregelventilen 18a eingestellt. Differentialzylinder weisen nur auf einer Seite des Zylinderkolbens eine Kolbenstange auf. Aufgrund der verkleinerten Kolbenfläche bzw. Wirkfläche durch die Kolbenstange herrscht bei symmetrischer Lage in der auf der Seite der Kolbenstange liegenden Zylinderkammer ein höherer Druck im Verhältnis zum Druck in der gegenüberliegenden Zylinderkammer.

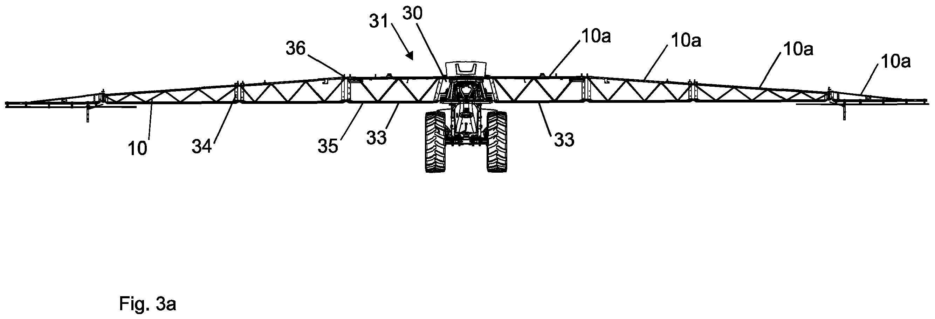

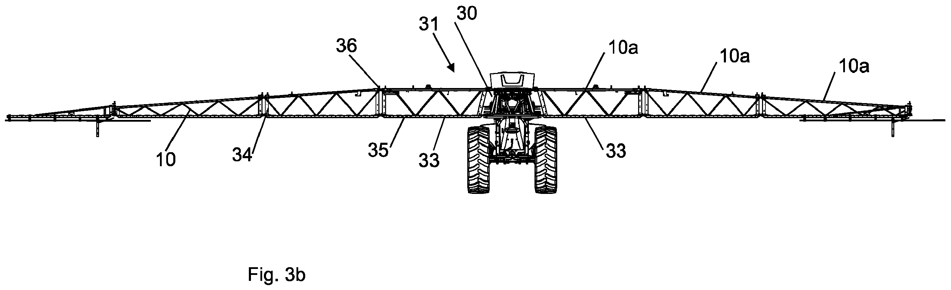

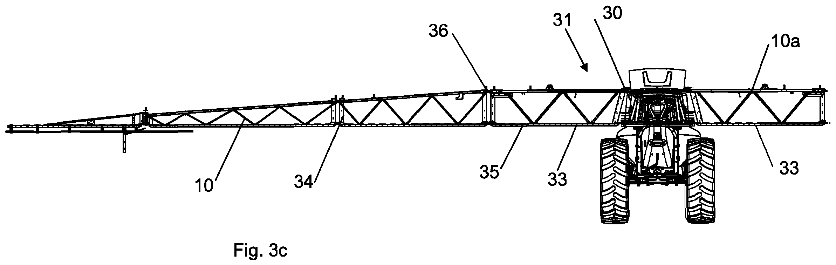

Die Figuren 3a-c zeigen jeweils in schematischer Weise eine Heckansicht einer Maschine 31, welche als Feldspritze ausgebildet ist. Die Feldspritze ist ähnlich wie in Fig. 2 ausgebildet mit einem Verteilergestänge 10 und einen Vorratsbehälter 30, in welchem auszubringendes Material untergebracht ist. Die Figuren 3a-c unterscheiden sich durch die Arbeitsbreite des Verteilergestänges. Das Verteilergestänge 10 ist in Fig. 3a beispielhaft durch vier Gestängeabschnitte 10a zu beiden Seiten des Vorratsbehälters 30 gebildet. In Fig. 3b sind es rechtsseitig nur drei Gestängeabschnitte 10a, da der äußere Gestängeabschnitt 10a sich im eingeklappten Zustand befindet. In Fig. 3c ist rechtsseitig nur ein Gestängeabschnitt 10a ausgeklappt, während die äußeren drei eingeklappt sind. Das Verteilergestänge 10 ist demnach beispielhaft asymmetrisch gelagert, da in den Figuren 3b und 3c auf beiden Seiten des Vorratsbehälters 30 nicht dieselbe Anzahl an Gestängeabschnitten 10a im ausgeklappten Zustand ist. Generell gilt für ein asymmetrisches Verteilergestänge 10, dass es sich zu beiden Seiten in der Anzahl der ausgeklappten Gestängeabschnitte 10a, oder generell gesagt in der Arbeitsbreite unterscheidet.

Es kommt daher vorzugsweise in den Fig. 3b und 3c zu einer Druckdifferenz Δp. Die Druckdifferenz Δp entsteht dadurch, dass das Verteilergestänge 10 rechtsseitig und linksseitig eine unterschiedliche Masseverteilung aufweist. Diese unterschiedliche Masseverteilung kann beispielhaft auch bei dem symmetrisch gelagerten Verteilergestänge 10 in Fig. 3a entstehen, wenn eine linksseitig ausgerichtete Neigung auftritt.

Eine Verstellung der Gesamtneigung des Verteilergestänges 10, also eine Verstellung des ausgeklappten, geraden Verteilergestänges 10 ist durch ein Steuer- und/oder Regelsystem gemäß Fig. 1 möglich.

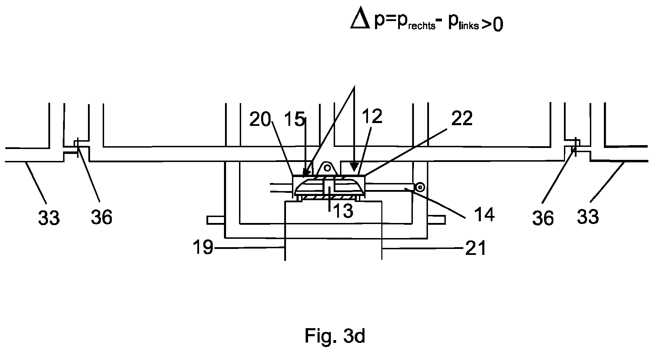

Fig. 3d zeigt hierzu einen Detailausschnitt des Steuer- und/oder Regelsystems gemäß Fig. 1 mit den eingestellten Druckverhältnissen für das asymmetrisch gelagerte oder linksseitig geneigte Verteilergestänge 10. Die Druckdifferenz Δp zwischen der linksseitigen ersten Druckseite 20 und der rechtsseitigen zweiten Druckseite 22 des Stellorgans 12 ist größer Null. Demnach ist der linksseitige Druck größer als der rechtsseitige Druck.

Soll nun beispielsweise nach einem nur teilweisen Ausklappen oder Einklappen des Verteilergestänges 10, also bei einer Situation wie bspw. in Fig. 3c dargestellt, bei geschlossenen Proportionalventilen 23 eine unkontrollierte Neigungsänderung des Verteilergestänges 10 vermieden werden, so werden die Proportionalventile 23 durch die Datenverarbeitungseinheit mit einem elektrischen Signal angesteuert. Die Ansteuerung erfolgt dabei derart, dass die Proportionalventile 23 kontinuierlich zeitverzögert geöffnet werden. Die Öffnungsdauer beträgt bspw. 500 ms bis 1000 ms.

Durch die Uberwachung der Neigungsänderung des Verteilergestänges 10 wird bei einer zu schnellen Neigungsänderung des Verteilergestänges 10 der Offnungsquerschnitt der Proportionalventile 23 wieder verringert, wodurch die Bewegung des Verteilergestänges 10 verzögert werden kann und die Druckregelventile 18a ausreichend Zeit haben, den notwendigen Druck einzustellen.

Bei einer sehr langsamen Neigungsänderung des Verteilergestänges 10 können die Proportionalventile 23 auch stufenweise geöffnet werden.

Vor dem Öffnen der Proportionalventile 23 wird durch die Datenverarbeitungseinheit basierend auf Messsignalen von wenigstens einem nicht dargestellten Sensor ein Istwert einer Neigungslage des Verteilergestänges 10 ermittelt. Der Istwert entspricht beispielsweise einem Winkel zwischen dem Verteilergestänge 10 und der Maschine 31, insbesondere einer Hochachse der Maschine 31. Der wenigstens eine nicht dargestellte Sensor kann durch einen Abstandssensor, insbesondere einen Ultraschallsensor, gebildet sein.

Während des Öffnungsvorganges der Proportionalventile 23 werden auch die Druckregelventile 18a durch die Datenverarbeitungseinheit mit einem elektrischen Signal angesteuert. Die Ansteuerung erfolgt derart, dass die vor dem Öffnen der Proportionalventile 23 ermittelte Neigungslage des Verteilergestänges 10 gehalten wird. Hierbei wird durch wenigstens einen nicht dargestellten Signalfilter, beispielsweise ein PT1-Glied, ein Sollwert der Neigungslage des Verteilergestänges 10 zur Gegensteuerung der Neigungsänderung des Verteilergestänges 10 ermittelt. Der Neigungsänderung des Verteilergestänges 10 wird dabei durch die Datenverarbeitungseinheit solange gegengesteuert bis der ermittelte Sollwert dem vor der Öffnung der Proportionalventile 23 ermittelten Istwert der Neigungslage entspricht. Der Signalfilter kann dabei in die Datenverarbeitungseinheit integriert sein. Beim Öffnungsvorgang der Proportionalventile 18a wird dadurch die Druckdifferenz zwischen den Druckregelventilen 18a aufrechterhalten. Es erfolgt somit keine Drehung des Verteilergestänges 10.

Durch das kontinuierlich zeitverzögerte Öffnen der Proportionalventile 23 wird ermöglicht, dass die Datenverarbeitungseinheit die Druckregelventile 18a auf den zwischen den Proportionalventilen 23 und der jeweiligen Seite des Stellorgans 12 herrschenden Drucks einstellen kann. Die Einstellung des herrschenden Drucks wird zumindest annähernd in Echtzeit ausgeführt. Somit kann einer Neigungsänderung direkt entgegengewirkt und eine unkontrollierte Bewegung des Verteilergestänges 10 verhindert werden.

Um beispielsweise zum Zeitpunkt der Betätigung bzw. der Öffnung der Proportionalventile 23 einen stufenlosen, möglichst ruckfreien Übergang von der geschlossenen Schaltstellung hin zum Schaltvorgang der Proportionalventile 23 zu ermöglichen, sind zweckmäßigerweise Klappzustandssensoren zuschaltbar.

Dabei wird beispielsweise vor der Betätigung bzw. der Öffnung der Proportionalventile 23 der Klappzustand des Verteilergestänges 10 durch die Klappzustandssensoren gemessen. Durch die Datenverarbeitungseinheit wird mittels Soll-Ist-Wert Abgleich ein elektrisches Druckregelsignal generiert. Der Soll-Ist-Wert Abgleich basiert dabei auf dem Messwert des jeweiligen Klappzustandssensors und in der Datenverarbeitungseinheit gespeicherter Sollwerte. Die Druckregelventile 18a werden durch die Datenverarbeitungseinheit mit dem Druckregelsignal angesteuert. Die Ansteuerung erfolgt dabei derart, dass die Druckregelventile 18a auf die herrschende Druckdifferenz zwischen den Proportionalventilen 23 und der jeweiligen Seite des Stellorgans 12 eingestellt werden. Somit wird ein stufenloser, möglichst ruckfreier Übergang von der geschlossenen Schaltstellung hin zum Schaltvorgang der Proportionalventile 23 ermöglicht.

Nicht erfindungsgemäß kann beispielsweise anstatt der Proportionalventile 23 eine Kombination nicht dargestellter anderer Ventile eingesetzt werden. Die Ventilkombination umfasst zwei oder mehrere Ventile. Die Ventile werden dabei beim Öffnungsvorgang zweckmäßigerweise nacheinander durch die Datenverarbeitungseinheit angesteuert. Das bedeutet, dass die Kombination aus zwei oder mehreren Ventilen eine mehrstufige Öffnung des Querschnittes der beiden Zuführungsleitungen zum Stellorgan 12 ermöglicht. Beispielsweise kann bei Kombination von zwei Ventilen in einer ersten Schaltstufe ein erster Teilquerschnitt der Zuführungsleitungen geöffnet werden und in einer zweiten Schaltstufe der Querschnitt vollständig geöffnet werden. Somit wird eine an die Proportionalventile 23 angenäherte Schaltcharakteristik ermöglicht.

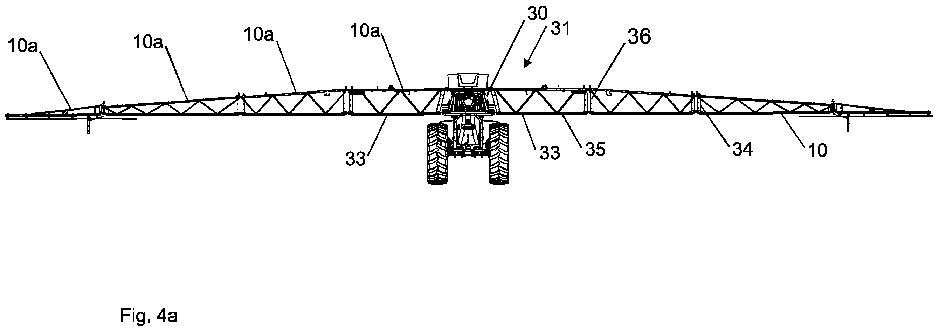

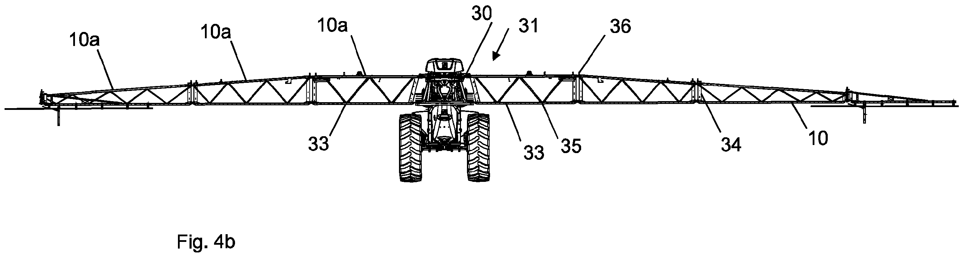

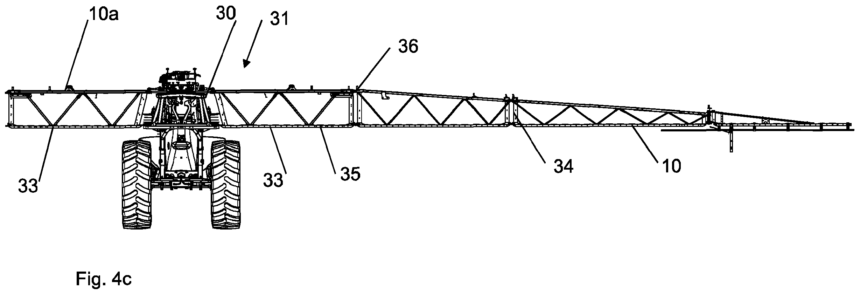

Die Figuren 4a-c zeigen jeweils in schematischer Weise eine Heckansicht einer Maschine 31, welche als Feldspritze ausgebildet ist. Die Feldspritze ist ähnlich wie in Fig. 2 ausgebildet und umfasst ein Verteilergestänge 10 und einen Vorratsbehälter 30 mit auszubringendem Material. Die Figuren 4a-c unterscheiden sich durch die Arbeitsbreite des Verteilergestänges. Das Verteilergestänge 10 ist in Fig. 4a beispielhaft durch vier Gestängeabschnitte 10a zu beiden Seiten des Vorratsbehälters 30 und ein zentrales Gestängeabschnitt 10a gebildet. In Fig. 4b sind es linksseitig nur drei Gestängeabschnitte 10a, der äußere Gestängeabschnitt 10a ist eingeklappt. In Fig. 4c ist linksseitig nur ein Gestängeabschnitt 10a ausgeklappt, die drei äußeren Gestängeabschnitte 10a sind eingeklappt. Das Verteilergestänge 10 ist demnach wie in den Figuren 3b und 3c asymmetrisch gelagert, da es in den Figuren 4b und 4c auf beiden Seiten des Vorratsbehälters 30 nicht dieselbe Anzahl an ausgeklappten Gestängeabschnitten 10a aufweist. Es kommt daher ebenso in den Fig. 4b und 4c zu einer Druckdifferenz Δp. Die Druckdifferenz Δp kann beispielhaft auch bei dem symmetrisch gelagerten Verteilergestänge 10 in Fig. 4a entstehen, wenn eine rechtsseitig ausgerichtete Neigung auftritt.

Eine Verstellung der Gesamtneigung des Verteilergestänges 10, also eine Verstellung des ausgeklappten, geraden Verteilergestänges 10 ist durch ein Steuer- und/oder Regelsystem gemäß Fig. 1 möglich.

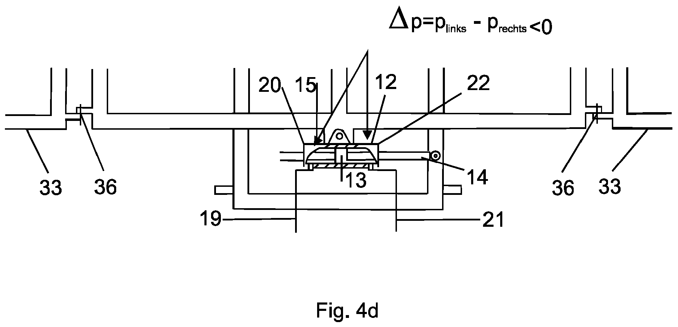

Fig. 4d zeigt hierzu einen Detailausschnitt des Steuer- und/oder Regelsystems gemäß Fig. 1 mit den eingestellten Druckverhältnissen für das asymmetrisch gelagerte oder rechtsseitig geneigte Verteilergestänge 10. Die Druckdifferenz Δp zwischen der linksseitigen ersten Druckseite 20 und der rechtsseitigen zweiten Druckseite 22 des Stellorgans 12 ist negativ. Demnach ist der linksseitige Druck kleiner als der rechtsseitige Druck. Damit sich das Verteilergestänge 10 beim Öffnen der Proportionalventile 23 nicht auf der rechten Seite nach unten bewegt, muss diese Druckdifferenz vorteilhafterweise durch die Druckregelventile 18a während des Öffnungsvorganges der Proportionalventile 23 gehalten werden.

Generell kann das erfindungsgemäße Steuer- und/oder Regelsystem zur Neigungsregelung und Vermeidung von unkontrollierten Bewegungen effizient für symmetrische oder asymmetrische Verteilergestänge mit einer beliebigen Arbeitsbreite verwendet werden.

Insbesondere ist das erfindungsgemäße Steuer- und/oder Regelsystem derart ausgebildet, dass die Druckregelventile 18a während des Öffnungsvorganges der Proportionalventile 23 zumindest annähernd an den Druck der jeweiligen Stellseite angepasst sind.

Hierdurch lässt sich verhindern, dass beispielsweise bei einem asymmetrischen Ausklappen des Verteilergestänges 10, wie in Fig. 4 a - c dargestellt, bei geschlossenen Proportionalventilen 23 das Verteilergestänge 10 beim Öffnungsvorgang der Proportionalventile 23 eine unkontrollierte Bewegung im Uhrzeigersinn ausführt oder bei einer Situation gemäß Fig. 3 a - c eine Bewegung entgegen des Uhrzeigersinns.

Zu diesem Zweck werden während des Öffnungsvorganges der Proportionalventile 23 die Druckregelventile 18a derart angesteuert, dass zumindest annähernd die Drücke der linken und rechten Druckseite des Stellorgans 12 an den Proportionalventilen 23 anstehen, so dass keine unkontrollierte Druckänderung beim Öffnen der Proportionalventile 23 und eine hierdurch hervorgerufene unkontrollierte Bewegung des Verteilergestänges 10 zu erwarten ist. Mittels der in der Datenverarbeitungseinheit für das jeweilige Druckregelventil 18a hinterlegten Kennlinien, dies können auch identische, insbesondere generische Kennlinien sein, werden durch die Datenverarbeitungseinheit die elektrischen Signale zur Ansteuerung des Druckregelventils 18a generiert. Die Ansteuerung der Proportionalventile 23 und der Druckregelventile 18a bei einem nur teilweisen Ausklappen oder Einklappen des Verteilergestänges 10 erfolgt wie in Fig. 3c und Fig. 3d beschrieben. Aufgrund von Hysterese oder Fertigungstoleranzen, kann es hierbei zu einer Einstellung eines abweichenden Druckwertes von dem aus der Kennlinie zu erwartenden Druckwertes kommen. Zu diesem Zweck kann zusätzlich ein Regelkreis für Klappzustandssensoren und andere Sensoren, die am Verteilergestänge 10 und/oder am Zugfahrzeug angeordnet sind, vorgesehen sein. Dabei vergleicht der Regelkreis während des Öffnungsvorganges des jeweiligen Proportionalventils 23 die von dem Klappzustandssensor und den anderen Sensoren gemessenen Werte und nimmt ggf. eine Anpassung der Stellung des Druckregelventils 18a vor. Dieser Regler kann beispielsweise als PI-Regler ausgebildet sein. Der Sollwert kann auch zeitlich veränderbar sein, wenn beispielsweise im Anschluss an den Öffnungsvorgang des Proportionalventils 23 eine definierte Neigung des Verteilergestänges 10 eingestellt werden soll.

### Bezugszeichenliste

- 10: Verteilergestänge
- 10a: Gestängeabschnitt
- 11: Mittelteil
- 12: Stellorgan
- 13: Kolben
- 14: Kolbenstange
- 15: Gehäuse
- 16: Hydraulikkreislauf
- 17: Pumpe
- 18: Ventileinheit
- 18a: Druckregelventil
- 19: erste Zuführleitung
- 20: erste Druckseite
- 21: zweite Zuführleitung
- 22: zweite Druckseite
- 23: Proportionalventil
- 25: Hydraulikreservoir
- 30: Vorratsbehälter
- 31: Maschine
- 33: Ausleger
- 34: Vertikalstrebe
- 35: Horizontalstrebe
- 36: Gelenk

## Patentansprüche

1. Steuer- und/oder Regelsystem für ein landwirtschaftliches Nutzfahrzeug, das ein Verteilergestänge (10) zum Ausbringen von Material, wie Düngemittel, Pflanzenschutzmittel oder Saatgut umfasst, bei dem sich das Verteilergestänge (10) quer zur Fahrtrichtung erstreckt und ein Mittelteil (11) und zwei mit dem Mittelteil (11) durch Gelenke (36) verbundene seitliche Ausleger (33) mit mehreren zueinander in Transportstellung einklappbaren und in Arbeitsstellung ausklappbaren, durch Gelenke (36) verbundene Gestängeabschnitte (10a) aufweist, umfassend
wenigstens ein Stellorgan (12) und wenigstens zwei Ventileinheiten (18) in Form von zwei Druckregelventilen (18a) zur Regelung der Neigung des Verteilergestänges (10), wobei die Ventileinheiten (18) mit dem Stellorgan (12) verbunden sind,
sowie eine Datenverarbeitungseinheit, die mit den Ventileinheiten (18) signalverbunden oder signalverbindbar ist,
**dadurch gekennzeichnet, dass** jeder Ventileinheit (18) zusätzlich wenigstens ein Proportionalventil (23) als Sperrventil zugeordnet ist, und
dass die Datenverarbeitungseinheit mit den Druckregelventilen (18a) und mit den Proportionalventilen (23) signalverbunden oder signalverbindbar ist.

2. System nach Anspruch 1, **dadurch gekennzeichnet, dass** die Datenverarbeitungseinheit derart konfiguriert ist, dass vor dem Öffnen der Proportionalventile (23) basierend auf Messsignalen von wenigstens einem Sensor ein Istwert einer Neigungslage des Verteilergestänges (10) ermittelbar ist.

3. System nach einem der vorhergehenden Ansprüche, **dadurch gekennzeichnet, dass** die Datenverarbeitungseinheit derart konfiguriert ist, dass ein Sollwert der Neigungslage des Verteilergestänges (10) durch wenigstens einen Signalfilter, insbesondere durch wenigstens ein PT1-Glied, ermittelbar ist.

4. System nach einem der vorhergehenden Ansprüche, **dadurch gekennzeichnet, dass** beim Öffnen, insbesondere beim verzögerten Öffnen, der Proportionalventile (23) die Ventileinheiten (18) an einen definierbaren Druck anpassbar sind derart, dass die Neigungslage des Verteilergestänges (10) gehalten wird.

5. System nach einem der vorhergehenden Ansprüche, **dadurch gekennzeichnet, dass** basierend auf einem gemessenen Signal wenigstens eines Sensors oder einem anderweitig ermittelten Istwert mittels eines Soll-Ist-Wert Abgleichs, die Ventileinheiten (18) unabhängig voneinander durch die Datenverarbeitungseinheit einstellbar sind.

6. System nach einem der vorhergehenden Ansprüche, **dadurch gekennzeichnet, dass** jeder Ventileinheit (18) wenigstens ein Klappzustandssensor zugeordnet ist, wobei die Datenverarbeitungseinheit mit dem Klappzustandssensor signalverbunden oder signalverbindbar ist.

7. System nach einem der vorhergehenden Ansprüche, **dadurch gekennzeichnet, dass** die Ventileinheiten (18) in gleichen und/oder verschiedenen Stellungen unabhängig voneinander ein- und/oder verstellbar sind; und/oder dass die Ventileinheiten (18) anhand einer bekannten Kennlinie elektronisch gesteuert auf einen vorbestimmten Sollwert einstellbar sind.

8. System nach einem der vorhergehenden Ansprüche, **dadurch gekennzeichnet, dass** bei einer symmetrischen, horizontal ausgerichteten Lage des Verteilergestänges (10) die beiden Ventileinheiten (18) einen identischen Druck, insbesondere von 70 - 90 bar, aufweisen; und/oder dass bei einer asymmetrisch oder geneigt ausgerichteten Lage des Verteilergestänges (10) die beiden Ventileinheiten (18) eine Druckdifferenz aufweisen.

9. Landwirtschaftliches Nutzfahrzeug zum Ausbringen von Material, wie Düngemittel, Pflanzenschutzmittel oder Saatgut, mit einem Verteilergestänge und einem Steuer- und/oder Regelsystem nach einem der vorhergehenden Ansprüche.

10. Verfahren zur Steuerung und/oder Regelung eines landwirtschaftlichen Nutzfahrzeuges mit einem Steuer- und /oder Regelsystem nach Anspruch 9, bei dem
- die Datenverarbeitungseinheit ein Stellsignal für wenigstens ein Proportionalventil (23) generiert,
- das Proportionalventil (23) durch das Stellsignal angesteuert und betätigt wird,
- die Datenverarbeitungseinheit während der Betätigung des Proportionalventils (23) ein Druckregelsignal für wenigstens eine Ventileinheit (18) generiert, und
- die Ventileinheit (18) durch das Druckregelsignal anhand einer in der Datenverarbeitungseinheit gespeicherten Kennlinie auf einen vorbestimmten Sollwert eingestellt wird.

11. Verfahren nach Anspruch 10, **dadurch gekennzeichnet, dass** vor dem Öffnen der Proportionalventile (23) basierend auf Messsignalen von wenigstens einem Sensor ein Istwert einer Neigungslage des Verteilergestänges (10) ermittelt wird.

12. Verfahren nach Anspruch 10 bis 11, **dadurch gekennzeichnet, dass** ein Sollwert der Neigungslage des Verteilergestänges (10) durch wenigstens einen Signalfilter, insbesondere durch wenigstens ein PT1-Glied, ermittelt wird.

13. Verfahren nach Anspruch 10 bis 12, **dadurch gekennzeichnet, dass** beim Öffnen, insbesondere beim verzögerten Öffnen, der Proportionalventile (23) die Ventileinheiten (18) an einen definierbaren Druck angepasst werden und die Neigungslage des Verteilergestänges (10) gehalten wird.

14. Verfahren nach Anspruch 10 bis 13, **dadurch gekennzeichnet, dass** die Ventileinheiten (18) in gleichen oder verschiedenen Ventilstellungen unabhängig voneinander eingestellt und/oder verstellt werden.

15. Verfahren nach Anspruch 10 bis 14, **dadurch gekennzeichnet, dass**
- wenigstens ein Klappzustandssensor den Klappzustand des Verteilergestänges (10) ermittelt und ein Klappzustandssignal erzeugt,
- die Datenverarbeitungseinheit das Klappzustandssignal empfängt und ein Stellsignal für die wenigstens eine Ventileinheit (18) generiert, und
- die Ventileinheit (18) durch das Stellsignal anhand einer in der Datenverarbeitungseinheit gespeicherten Kennlinie auf einen vorbestimmten Sollwert eingestellt wird.

## Claims

1. Control and/or regulating system for an agricultural utility vehicle comprising a distributor linkage (10) for dispensing material, such as fertilizers, plant protection agents or seed stock, with which the distributor linkage (10) extends transversely to the direction of travel and has a middle part (11) and two lateral arms (33) connected to the middle part (11) by hinges (36) with a plurality of linkage sections (10a) interconnected by hinges (36) that in the transport position can be folded in and in the working position can be folded out, comprising
at least one adjusting element (12) and at least two valve units (18) in the form of two pressure control valves (18a) for regulating the inclination of the distributor linkage (10), wherein the valve units (18) are connected to the adjusting element (12), along with a data processing unit that is connected by signal or can be connected by signal to the valve units (18), **characterized in that** at least one proportional valve (23) is additionally assigned to each valve unit (18) as a shut-off valve, and **in that** the data processing unit is connected by signal or can be connected by signal to the pressure control valves (18a) and to the proportional valves (23).

2. System according to claim 1, **characterized in that** the data processing unit is configured in such a way that an actual value of an inclination position of the distributor linkage (10) can be determined based on measurement signals from at least one sensor before the proportional valves (23) are opened.

3. System according to any of the preceding claims, **characterized in that** the data processing unit is configured in such a way that a target value of the inclination position of the distributor linkage (10) can be determined by at least one signal filter, in particular by at least one PT1 element.

4. System according to any of the preceding claims, **characterized in that,** when the proportional valves (23) are opened, in particular when they are delayed, the valve units (18) can be adapted to a definable pressure in such a way that the inclination position of the distributor linkage (10) is maintained.

5. System according to any of the preceding claims, **characterized in that,** based on a measured signal of at least one sensor or an otherwise determined actual value, the valve units (18) can be set independently of one another by the data processing unit.

6. System according to any of the preceding claims, **characterized in that** at least one folding state sensor is associated with each valve unit (18), wherein the data processing unit is connected by signal or can be connected by signal to the folding state sensor signal.

7. System according to any of the preceding claims, **characterized in that** the valve units (18) can be set and/or adjusted independently of one another in identical and/or different positions; and/or **in that** the valve units (18) can be set to a predetermined target value on the basis of a known characteristic curve in an electronically controlled manner.

8. System according to any of the preceding claims, **characterized in that,** when the distributor linkage (10) is in a symmetrical, horizontally oriented position, the two valve units (18) have an identical pressure, especially of 70 to 90 bar; and/or **in that,** when the distributor linkage (10) is in an asymmetrically or angularly aligned position, the two valve units (18) have a pressure difference.

9. Agricultural utility vehicle for dispensing material, such as fertilizers, plant protection agents or seed stock, having a distributor linkage and a control and/or regulating system according to any of the preceding claims.

10. Method for controlling and/or regulating an agricultural utility vehicle, having a control and /or regulating system according to claim 9, with which
- the data processing unit generates an adjustment signal for at least one proportional valve (23),
- the proportional valve (23) is triggered and actuated by the control signal,
- the data processing unit generates a pressure control signal for at least one valve unit (18) during the actuation of the proportional valve (23), and
- the valve unit (18) is set to a predetermined target value by means of the pressure control signal on the basis of a characteristic curve stored in the data processing unit.

11. Method according to claim 10, **characterized in that** an actual value of an inclination position of the distributor linkage (10) is determined based on measurement signals from at least one sensor before the proportional valves (23) are opened.

12. Method according to claims 10 to 11, **characterized in that** a target value of the inclination position of the distributor linkage (10) is determined by at least one signal filter, especially by at least one PT1 element.

13. Method according to claims 10 to 12, **characterized in that,** when the proportional valves (23) are opened, in particular when their opening is delayed, the valve units (18) are adapted to a definable pressure and the inclination position of the distributor linkage (10) is maintained.

14. Method according to claims 10 to 13, **characterized in that** the valve units (18) are set and/or adjusted independently of one another in the same or different valve positions.

15. Method according to claims 10 to 14, **characterized in that**
- at least one folding state sensor determines the folding state of the distributor linkage (10) and generates a folding state signal,
- the data processing unit receives the folding state signal and generates a control signal for the at least one valve unit (18), and
- the valve unit (18) is set to a predetermined target value by means of the control signal based on a characteristic curve stored in the data processing unit.

## Revendications

1. Système de commande et/ou de réglage pour un véhicule utilitaire agricole, qui comprend une tringlerie d'épandage (10) pour déverser du matériau, comme de l'engrais, un agent de protection des plantes ou une semence, dans lequel la tringlerie d'épandage (10) s'étend transversalement à la direction d'avance et comprend une partie centrale (11) et deux flèches (33) latérales reliées à la partie centrale (11) par des articulations (36), avec plusieurs sections de tringlerie (10a) reliées par les articulations (36), pouvant être rabattues les unes sur les autres dans la position de transport et être déployées dans la position de travail, comprenant
au moins un organe de réglage (12) et au moins deux unités de soupape (18) sous la forme de deux régulateurs de pression (18a) pour le réglage de l'inclinaison de la tringlerie d'épandage (10), les unités de soupape (18) étant reliées à l'organe de réglage (12), ainsi qu'une unité de traitement de données, qui est reliée par signal ou peut être reliée par signal aux unités de soupape (18), **caractérisé en ce qu'**à chaque unité de soupape (18) est attribué en outre au moins une soupape proportionnelle (23) en tant que soupape d'arrêt et que l'unité de traitement de données est reliée par signal ou peut être reliée par signal avec les régulateurs de pression (18a) et avec les soupapes proportionnelles (23).

2. Système selon la revendication 1, **caractérisé en ce que** l'unité de traitement de données est configurée de telle sorte que, avant l'ouverture des soupapes proportionnelles (23), une valeur réelle d'un état d'inclinaison de la tringlerie d'épandage (10) puisse être déterminée sur la base de signaux de mesure provenant d'au moins un capteur.

3. Système selon l'une quelconque des revendications précédentes, **caractérisé en ce que** l'unité de traitement de données est configurée de telle sorte qu'une valeur de consigne de l'état d'inclinaison de la tringlerie d'épandage (10) puisse être déterminée par au moins un filtre de signal, en particulier par au moins un bloc PT1.

4. Système selon l'une quelconque des revendications précédentes, **caractérisé en ce que** lors de l'ouverture, en particulier lors de l'ouverture retardée, des soupapes proportionnelles (23), les unités de soupape (18) peuvent être adaptées à une pression pouvant être définie, de manière à maintenir l'état d'inclinaison de la tringlerie d'épandage (10).

5. Système selon l'une quelconque des revendications précédentes, **caractérisé en ce que,** sur la base d'un signal mesuré d'au moins un capteur ou d'une valeur réelle déterminée autrement, les unités de soupape (18) sont réglables indépendamment l'une de l'autre par l'unité de traitement de données au moyen d'une comparaison de valeurs de consigne et réelle.

6. Système selon l'une quelconque des revendications précédentes, **caractérisé en ce qu'**à chaque unité de soupape (18) est attribué au moins un capteur d'état de déploiement, l'unité de traitement de données étant reliée par signal ou pouvant être reliée par signal au capteur d'état de déploiement.

7. Système selon l'une quelconque des revendications précédentes, **caractérisé en ce que** les unités de soupape (18) sont réglables et/ou ajustables dans des positions identiques et/ou différentes indépendamment les unes des autres ; et/ou **que** les unités de soupape (18) sont réglables par commande électronique sur une valeur de consigne prédéfinie à l'aide d'une ligne caractéristique connue.

8. Système selon l'une quelconque des revendications précédentes, **caractérisé en ce que** lors d'un état symétrique orienté à l'horizontale de la tringlerie d'épandage (10), les deux unités de soupape (18) présentent une pression identique, en particulier de 70 à 90 bar ; et/ou **que** lors d'un état asymétrique ou orienté incliné de la tringlerie d'épandage (10), les deux unités de soupape (18) présentent une différence de pression.

9. Véhicule utilitaire agricole pour déverser du matériau, tel que de l'engrais, un agent de protection des plantes ou une semence, comprenant une tringlerie d'épandage et un système de commande et/ou de réglage selon l'une quelconque des revendications précédentes.

10. Procédé de commande et/ou de réglage d'un véhicule utilitaire agricole comprenant un système de commande et/ou de réglage selon la revendication 9, dans lequel
- l'unité de traitement de données génère un signal de réglage pour au moins une soupape proportionnelle (23),
- la soupape proportionnelle (23) est commandée et actionnée par le signal de réglage,
- l'unité de traitement de données génère, pendant l'actionnement de la soupape proportionnelle (23), un signal de régulation de pression pour au moins une unité de soupape (18) et
- l'unité de soupape (18) est réglée par le signal de régulation de pression à l'aide d'une ligne caractéristique mémorisée dans l'unité de traitement de données sur une valeur de consigne prédéfinie.

11. Procédé selon la revendication 10, **caractérisé en ce que,** avant l'ouverture des soupapes proportionnelles (23), une valeur réelle d'un état d'inclinaison de la tringlerie d'épandage (10) est déterminée sur la base de signaux de mesure provenant d'au moins un capteur.

12. Procédé selon la revendication 10 à 11, **caractérisé en ce qu'**une valeur de consigne de l'état d'inclinaison de la tringlerie d'épandage (10) est déterminée par au moins un filtre de signal, en particulier par au moins un bloc PT1.

13. Procédé selon la revendication 10 à 12, **caractérisé en ce que** lors de l'ouverture, en particulier lors de l'ouverture retardée, des soupapes proportionnelles (23), les unités de soupape (18) sont adaptées à une pression pouvant être définie et l'état d'inclinaison de la tringlerie d'épandage (10) est maintenu.

14. Procédé selon la revendication 10 à 13, **caractérisé en ce que** les unités de soupape (18) sont réglées et/ou ajustées dans des positions de soupape identiques ou différentes indépendamment les unes des autres.

15. Procédé selon la revendication 10 à 14, **caractérisé en ce que**
- au moins un capteur d'état de déploiement détermine l'état de déploiement de la tringlerie d'épandage (10) et produit un signal d'état de déploiement,
- l'unité de traitement de données reçoit le signal d'état de déploiement et génère un signal de réglage pour l'au moins une unité de soupape (18) et
- l'unité de soupape (18) est réglée par le signal de réglage à l'aide d'une ligne caractéristique mémorisée dans l'unité de traitement de données sur une valeur de consigne prédéfinie.
